# EUROPEAN PATENT APPLICATION

(11) **EP 1 878 892 A2**
(43) Date of publication of application: **16.01.2008**
(21) Application number: 07012812.9
(22) Date of filing: 29.06.2007
(51) Int. Cl.: F02B 31/06, F02M 25/07

(54) **Spark ignition type multi-cylinder engine**

(30) Priority: 07.07.2006 JP 2006187633
(71) Applicant: Yamaha Hatsudoki Kabushiki Kaisha, Iwata-shi, Shizuoka 438-8501 (JP)
(72) Inventor: Matsumoto, Hiromitsu, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a spark ignition type multi-cylinder engine (1), comprising: an intake device (2) for distributing intake air, which passed an entrance passage having a throttle valve, to an intake passage (53) of each cylinder (11); an exhaust gas recirculation device (5) for leading exhaust gas to an intake device (2) via an exhaust gas recirculation valve (64), wherein each of the intake passages (53) includes: a main intake passage (51) connected to a combustion chamber (S) via an intake valve (23) and having an intake control valve (44) at an upstream side thereof, and a plurality of auxiliary intake passages (52) for generating a tumble, extending along the main intake passage (51) and having upstream ends opened in an upstream of the intake control valve (44) and downstream ends opened in a vicinity of an intake valve (23) in the main intake passage (51), wherein said intake device (2) comprises a venturi tube (71) provided in the entrance passage on a downstream side of the throttle valve (34), and wherein an exhaust gas exit of the exhaust gas recirculation device (5) is formed on an internal wall surface of this venturi tube (34).

## Description

The present invention relates to a spark ignition type multi-cylinder engine using an exhaust gas recirculation device for an improvement in fuel efficiency.

Conventionally, as a spark ignition type engine improving its fuel efficiency using an exhaust gas recirculation device (hereinafter simply referred to as "EGR device"), the EGR device disclosed in Patent Document 1 is known.

The conventional engine shown in FIG. 17 of this Patent Document 1 is a V-type six-cylinder engine, which includes two intake valves and two exhaust valves for a cylinder, a valve operating system for driving these intake and exhaust valves by an intake camshaft and an exhaust camshaft, a variable valve timing mechanism for individually changing phases between the intake camshaft and the exhaust camshaft, and an intake device for distributing intake air measured by a throttle valve to each cylinder.

In this conventional engine, internal EGR is performed having an overlap amount between the intake and exhaust valves in addition to external EGR in low or medium load operation, and pumping loss is reduced by delaying a timing that the exhaust valve closes. Thereby, fuel efficiency is improved. The variable valve timing mechanism is used for adjusting an overlap amount and delaying a timing that the exhaust valve closes. Also, in this engine, an air-fuel ratio of a fuel is set to the theoretical air-fuel ratio in a high load operation, and thereby fuel efficiency is improved. A combustion temperature rises due to the setting to the theoretical air-fuel ratio in high load operation. However, exhaust gas is led into an intake passage by external EGR in high load operation in this conventional engine, and thereby a combustion temperature is lowered.

An external EGR device provided in a conventional general spark ignition type engine has a construction such that an EGR valve is provided in an EGR gas passage communicatively connecting an inside of an exhaust passage of an exhaust pipe and an inside of an intake passage on a downstream side of a throttle valve. In this kind of EGR device, a negative pressure in the exhaust passage is lowered in high load operation that a throttle opening is large, and thus EGR gas (exhaust gas) is not easily inducted into the intake passage. Therefore, it is known that a proportion of EGR gas to a whole amount of gas in the exhaust passage, namely an EGR rate lowers. An EGR rate (%) is calculated as {EGR gas amount / (fresh gas amount + EGR gas amount)} x 100.

As a conventional EGR device such that a large amount of EGR gas can be inducted into an intake passage in a high load operation, for example, an EGR device disclosed in Patent Document 2 is known. This EGR device described in Patent Document 2 is provided on a diesel engine, and has a construction such that EGR gas is drawn into the intake passage using a venturi tube provided in the intake passage. An EGR gas exit of this EGR device is formed on an internal wall surface of this venturi tube. In this EGR device for a diesel engine, a reed valve is provided between the EGR gas exit and an EGR valve for preventing a flow of intake air into an exhaust passage due to a pressure difference between the intake passage and the exhaust passage. In addition, a throttle valve is not provided because the engine having this EGR device is a diesel engine.
Patent Document 1: JP-A-Hei 5-86945
Patent Document 2: JP-A-2000-249004

The inventors of the present invention planned to provide an engine such that fuel efficiency is improved over the entire operation range of the engine and a producing cost is lowered. However, the inventors concluded that an engine such that an improvement of fuel efficiency is compatible with cost saving with the conventional technology disclosed in Patent Document 1 and Patent Document 2 for the reasons mentioned hereinafter.

In the engine shown in Patent Document 1, an overlap amount is increased using a variable valve timing mechanism in low and medium load operation to increase the internal EGR. Thereby, fuel efficiency is improved. A cost for producing this engine is high because a variable valve timing mechanism is expensive. Also, a negative pressure is lowered in high load operation as mentioned above, and an amount of EGR gas is insufficient. Thus, there is a limit on combustion temperature control. Therefore, it is difficult to improve fuel efficiency by having a higher compression ratio due to a problem of knocking.

An EGR device disclosed in Patent Document 2 is used for a diesel engine in which a throttle valve is not used, and it cannot be simply diverted to a spark ignition type engine.

The present invention is made for solving such problems, and its object is to provide an engine such that fuel efficiency is improved over almost the entire operation range and a producing cost can be reduced.

This objective is solved in an inventive manner by a spark ignition type multi-cylinder engine, comprising an intake device for distributing intake air, which passed an entrance passage having a throttle valve, to an intake passage of each cylinder; an exhaust gas recirculation device for leading exhaust gas to an intake device via an exhaust gas recirculation valve, wherein each of the intake passages includes: a main intake passage connected to a combustion chamber via an intake valve and having an intake control valve at an upstream side thereof, and a plurality of auxiliary intake passages for generating a tumble, extending along the main intake passage and having upstream ends opened in an upstream of the intake control valve and downstream ends opened in a vicinity of an intake valve in the main intake passage, wherein said intake device comprises a venturi tube provided in the entrance passage on a downstream side of the throttle valve, and wherein an exhaust gas exit of the exhaust gas recirculation device is formed on an internal wall surface of this venturi tube.

Preferably, the exhaust gas recirculation passage comprises a check valve provided between the exhaust gas exit and the exhaust gas recirculation valve.

According to a preferred embodiment, the spark ignition type multi-cylinder engine further comprises a control device configured to open the exhaust gas recirculation valve in the cases that an engine operation state is switched from a low load state to a high load state in a short period and/or the engine operating in a low load state stops.

Preferably, each cylinder has the intake control valve, and the auxiliary intake passages are provided such that two auxiliary intake passages are directed toward both sides of a valve stem of the intake valve and arranged in parallel to each other.

In the following, the present invention is explained in greater detail with respect to several embodiments thereof in conjunction with the accompanying drawings, wherein:
- FIG. 1: is a block diagram of a spark ignition type multi-cylinder engine according to the present embodiment,
- FIG. 2: is an enlarged cross-sectional view showing an important part of the embodiment,
- FIG. 3: is a view showing a construction of an intake system,
- FIG. 4: is a bottom plan view of a cylinder head,
- FIG. 5: is a cross-sectional view of a venturi part taken along a line V-V in FIG. 2, and
- FIG. 6: is a graph that is a map for setting an opening of an EGR valve.

### Description of Reference Numeral and Symbols:

- 1:: engine
- 2:: intake device
- 4:: catalytic converter
- 5:: exhaust gas recirculation device
- 12:: cylinder head
- 21:: intake port
- 23:: intake valve
- 26:: main intake port
- 27:: auxiliary intake port
- 31:: intake manifold
- 32:: surge tank
- 33:: venturi member
- 34:: throttle valve
- 41:: main intake path
- 42:: auxiliary intake path
- 43:: fuel injector
- 44:: intake control valve
- 51:: main intake passage
- 52:: auxiliary intake passage
- 53:: intake passage of each cylinder
- 54:: entrance passage
- 64:: EGR valve
- 65:: reed valve
- 71:: venturi tube

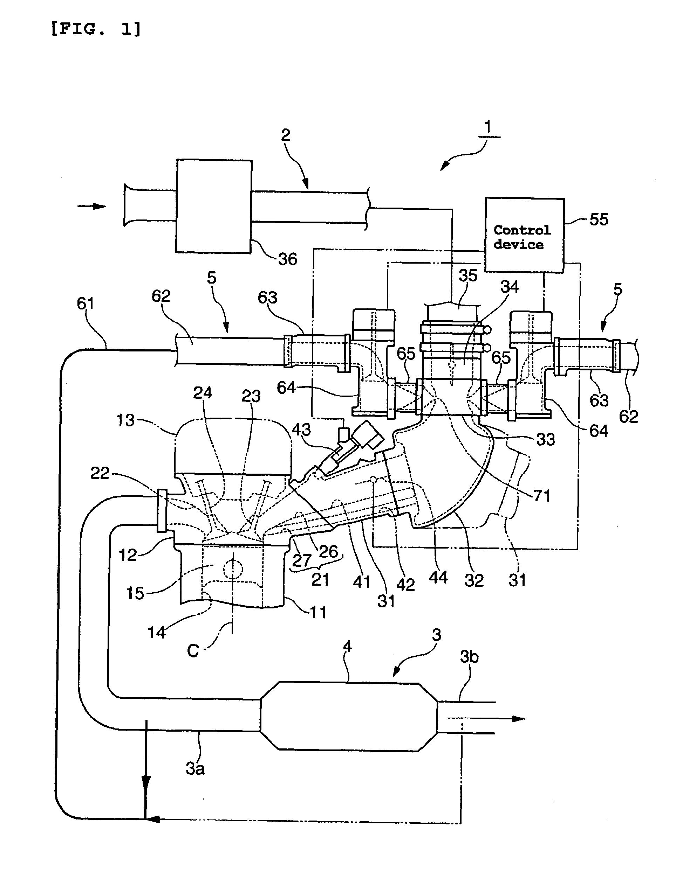

Hereinafter, an embodiment of the spark ignition type multi-cylinder engine will be described in detail with reference to FIGs. 1 through 6.

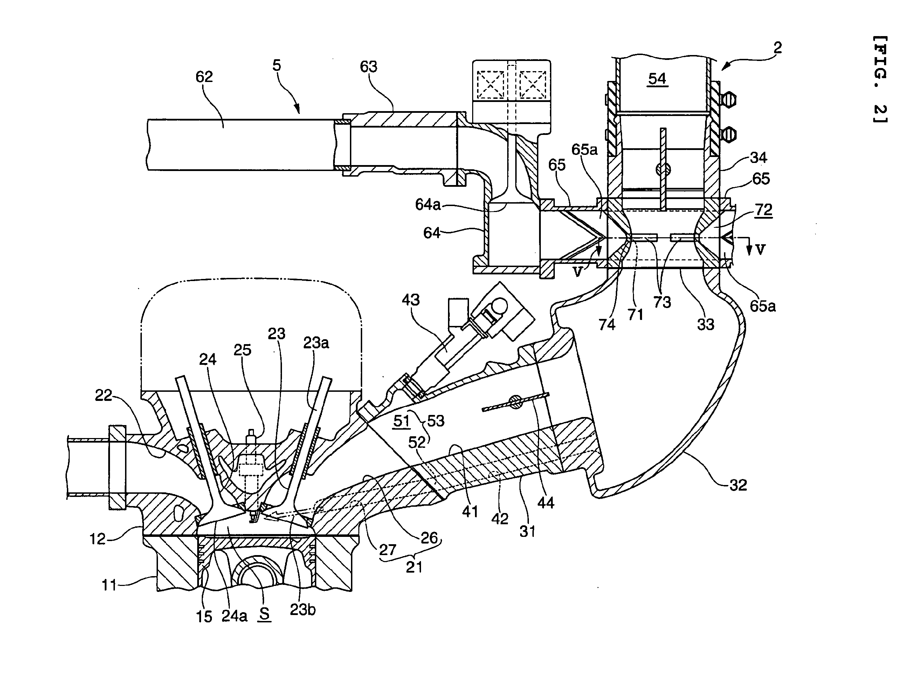

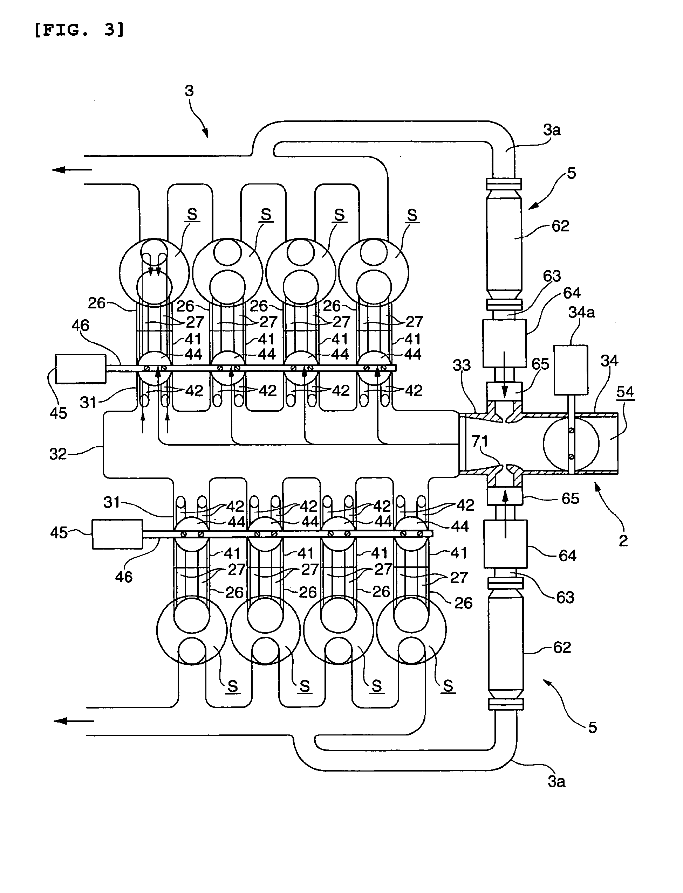

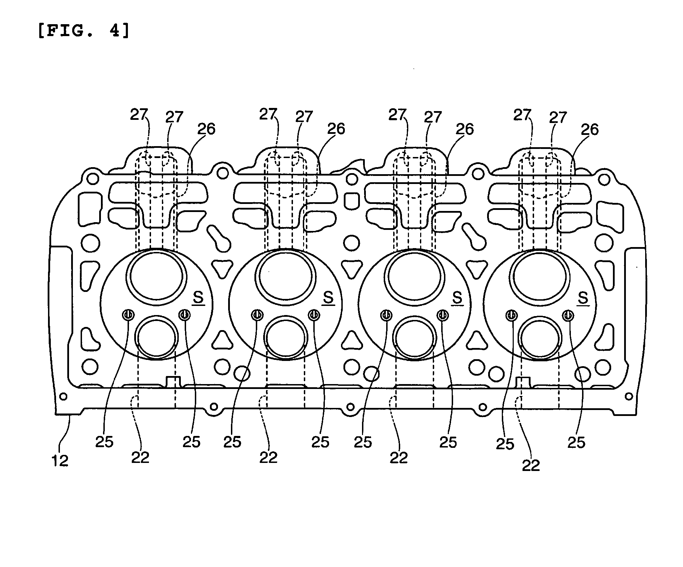

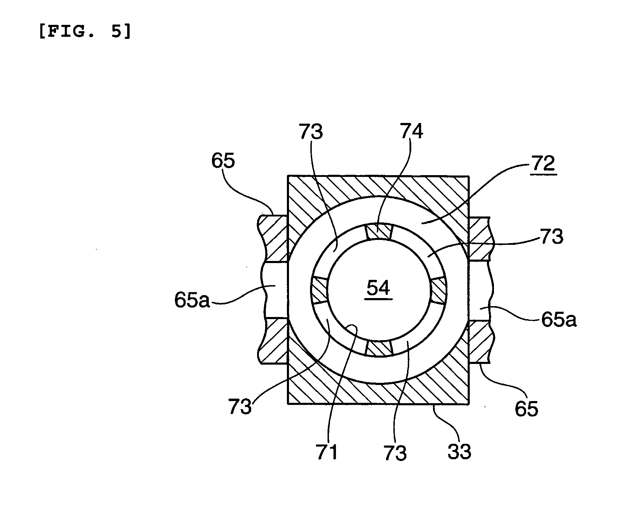

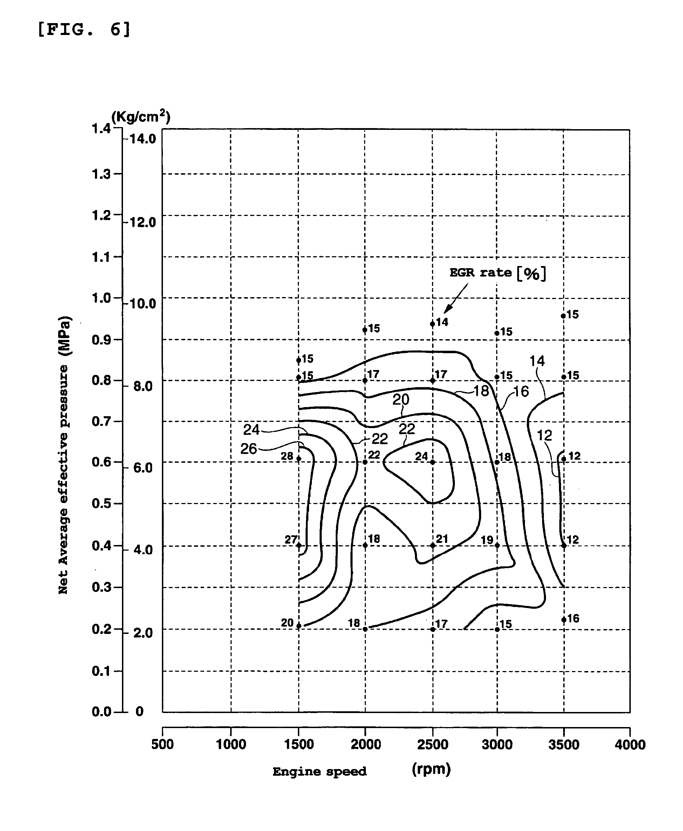

FIG. 1 is a block diagram of the spark ignition type multi-cylinder engine according to the present embodiment. FIG. 2 is an enlarged cross-sectional view showing an important part. FIG. 3 is a view showing a construction of an intake system. FIG. 4 is a bottom plan view of a cylinder head. FIG. 5 is a V-V line cross-sectional view of the venturi part taken along a line V-V in FIG. 2. FIG. 6 is a graph that is a map for setting an opening of the EGR valve.

In these drawings, a reference numeral 1 denotes the spark ignition type multi-cylinder engine according to this embodiment. This engine 1 is a four-cycle V-type eight-cylinder type engine. Because knocking does not easily occurs in this engine as described below, this engine is formed with a higher compression ratio comparing with a conventional V-type eight-cylinder engine.

An intake device 2 (see FIG. 1) mentioned below is connected to a side part of each of two cylinder columns of this engine 1, on which the two cylinder columns are facing each other (hereinafter simply referred to as "side part inside a V-bank"). An exhaust device 3 is connected to an opposite side part. The exhaust device 3 has a catalytic converter 4 constructed with a three-way catalyst. Also, an exhaust gas recirculation device (hereinafter simply referred to as "EGR device") 5 is connected to these exhaust device 3 and intake device 2.

As shown in FIG. 1, each cylinder column of this engine is constructed with a cylinder block 11, a cylinder head 12 mounted on the cylinder block 11, a head cover 13 mounted on this cylinder head 12, and so forth. In FIG. 1 and FIG. 2, a reference numeral 14 denotes a cylinder bore of the cylinder block 11, a reference numeral 15 denotes a piston, and a one-dot chain line C indicates an axis of the cylinder.

As shown in FIG. 2 and FIG. 4, cylinder head 12 is provided with an intake port 21 and an exhaust port 22 formed on each cylinder; an intake valve 23 and an exhaust valve 24 for opening and closing these ports 21 and 22; and two ignition plugs 25 for each cylinder. Although not shown, an OHV type valve operating system is used for a valve operating system for driving these intake valve 23 and exhaust valve 24 to reduce a cost.

The intake port 21 construct a part of the intake passage of each cylinder in the present embodiment. The intake port 21 is constructed with a main intake port 26 formed such that a cross-sectional area of the passage is relatively large, two auxiliary intake ports 27 that are formed parallel to the main intake port 26 and their cross-sectional areas are relatively small, and so forth.

The main intake port 26 is connected to a combustion chamber via an intake valve 23, and formed to extend from the combustion chamber S to the side part inside the V-bank of the cylinder head 12. A downstream end of the auxiliary intake port 27 opens at a part in a vicinity of the intake valve 23 of the main intake port 26 and on a side opposite to a part where a valve stem 23a of the intake valve 23 of the main intake port 26 penetrates. The auxiliary intake port 27 is formed such that it extends from the downstream end to the side part inside the V-bank of the cylinder head 12. The two auxiliary intake ports 27, 27 are formed such that two passage ports parallel to each other are drilled into the cylinder head 12.

As shown in FIG. 4, the main intake port 26 and the auxiliary intake port 27 are formed such that they linearly extend from the combustion chamber S toward the side part of the cylinder head 12 (the side part inside the V-bank) viewing from the axis direction of the cylinder. As shown in FIG. 2, the two auxiliary intake ports 27, 27 are formed in a position such that they are below the main intake port 26 (at the cylinder block 11 side) viewing from the axis direction of a crankshaft (not shown) while being almost parallel to the main intake port 26 and overlap with the main intake port 26 viewing from the axis direction of the cylinder as shown in FIG. 4.

Also, as in FIG. 2, these two auxiliary intake ports 27, 27 are formed in a position such that they overlap with each other viewing from the axis direction of the crankshaft, and, as in FIG. 4, formed such that they are parallel to each other at a distance viewing from the axis direction of the cylinder. That is, the auxiliary intake ports 27, 27 are formed below both the sides of the main intake port 26.

Further, as shown in FIG. 2, these two auxiliary intake ports 27, 27 are formed in the cylinder head 12 at an angle such that an imaginary extension line that this auxiliary intake port 27 extends to the combustion chamber contacts a valve body bottom surface 24a of the exhaust valve 24 or a peripheral wall of the combustion chamber S. Although not shown, an angle at which the auxiliary intake ports 27, 27 are formed can be also an angle such that they contact an upper peripheral wall of a cylinder bore 14.

As foregoing, the auxiliary intake port 27 is formed horizontally or slightly slanted along the main intake port 26. Thereby, intake air flowed out from the auxiliary intake port 27 passes through both the sides of the valve stem 23a of the opened intake valve 23, then passes through a part between a valve body 23b and an opening at a downstream end of the intake port 21, and flows into the combustion chamber S.

A tumble generates inside the cylinder because of a flow of a large amount of intake air through this auxiliary intake port 27. This tumble generates in a state having a prescribed width in the axis direction of the crankshaft because the two auxiliary intake ports 27 are aligned in the axis direction of the crankshaft. The two ignition plugs 25, 25 are mounted on the cylinder head 12 aligned in the axis direction of crankshaft so that fuel is certainly ignited although a width of a tumble is large (see FIG. 4).

As shown in FIG. 1 and FIG. 2, the intake device 2 for leading intake air into these main intake port 26 and auxiliary intake port 27 is constructed with an intake manifold 31 of each cylinder column connected to one side part of the cylinder 12 (the side part inside the V-bank), a surge tank 32 connected to an upstream end of this intake manifold 31, a throttle valve 34 connected to this surge tank 32 via a venturi member 33 mentioned below, and an air cleaner 36 connected to an upstream end of this throttle valve 34 via an intake pipe 35.

The intake manifold 31 is provided on each cylinder column, and provided with a main intake path 41 connected to the main intake port 26, two auxiliary intake paths 42, 42 connected to the auxiliary intake ports 27, a fuel injector 43, and an intake control valve 44 mentioned below. These main intake path 41, two auxiliary intake paths 42, 42, fuel injector 43, and intake control valve 44 are provided in each cylinder.

The main intake path 41 and the auxiliary intake paths 42 are formed such that they individually penetrate the intake manifold 31. The two auxiliary intake paths 42 are formed such that they overlap with each other viewing from the axis direction of the crankshaft as shown in FIG. 2, and are parallel to each other viewing from the axis direction of the cylinder as shown in FIG. 3 and FIG. 4.

As shown in FIG. 2, a main intake passage 51 is formed with the main intake path 41 and the main intake port 26, and an auxiliary intake passage 52 is formed with the auxiliary intake path 42 and the auxiliary intake port 27, in the engine 1 according to this embodiment. Also, an intake passage 53 of each cylinder in the present embodiment is constructed with the main intake passage 51 and the auxiliary intake passage 52.

The fuel injector 43 is mounted above a downstream end of the main intake path 41 of the intake manifold 31, and injects fuel from an upper part inside the main intake path 41. A fuel injection amount of the fuel injector 43 is set by a control device shown by a reference numeral 55 in FIG. 1. A fuel injection amount of the fuel injector 43 is controlled by the control device 55. The fuel injector 43 supplies fuel over almost the entire operation range of the engine 1 in the theoretical air-fuel ratio. However, there is a case that an exhaust temperature is lowered by changing the air-fuel ratio to the rich side to protect a catalyst in high speed and high load operation. In this embodiment, a fuel supply device in the present embodiment is constructed with this fuel injector 43 and the control device 55.

The intake control valve 44 for opening or closing the main intake passage 51 is provided inside an upstream end of the main intake path 41. This intake control valve 44 is constructed with a butterfly valve and opened or closed by the operation of a motor 45 (see FIG. 3) connected to the control device 55. In the intake control valve 44 according to this embodiment, the control device 55 controls the operation of the motor 45 by following a map previously obtained by an experiment. Thereby, the intake control valve 44 is continuously controlled to an optimum opening responding to an operation state of the engine.

Most intake air flows into the combustion chamber S passing through the auxiliary intake passage 52 in the case that this intake control valve 44 is closed. In addition, the control device 55 may be a control device which controls simply turning on and off of the intake control valve 44.

In this embodiment, as shown in FIG. 3, the intake control valves 44 of each cylinder are connected to a valve stem 46 penetrating the intake manifold 31 in a manner that the intake control valves 44 are interlocked with each other.

The surge tank 32 is formed into a shape such that it extends in the axis direction of the crankshaft. The intake manifold 31 of each cylinder column is respectively connected to one side part or the other side part of the surge tank 32. As shown in FIG. 3, this surge tank 32 distributes intake air flowed from the throttle valve 34 mentioned below to the intake passage 53 of each cylinder of each intake manifold 31. In addition, FIG. 2 shows a state that the intake manifold 31 of one side is mounted on the surge tank 32. However, eventually, the intake manifold 31 of the other side is mounted on the surge tank 32 as shown by a chain double-dashed line in FIG. 1. In this embodiment, an entrance passage 54 according to this teaching is constructed with the intake passage upstream of this part including the surge tank 32.

The venturi member 33 forms the intake passage between the surge tank 32 and the throttle valve 34. EGR gas is drawn from the EGR device 5 mentioned below into the intake passage (entrance passage 54) by a pressure difference. FIG. 3 shows a state such that the venturi member 33 and the throttle valve 34 are formed into one body. However, these members are eventually formed as separate bodies and assembled together as shown in FIG. 2.

The throttle valve 34 is constructed with a butterfly valve manually controlled. In addition, to manually control the throttle valve 34, it can be constructed such that a driving motor 34a is connected to the throttle valve 34 and an operation amount of this motor 34a is manually increased or decreased.

As shown in FIG. 1, the EGR device 5 connected to the venturi member 33 is constructed with an EGR gas cooler 62 connected to the exhaust device 3 by an EGR gas pipe 61, an EGR valve 64 (exhaust gas recirculating valve) connected to this EGR gas cooler 62 via a connecting pipe 63, a reed valve 65 interposed between this EGR valve 64 and the venturi member 33, and so forth.

The EGR gas pipe 61 is connected to an exhaust pipe 3a positioned upstream of the catalytic converter 4 of the exhaust device 3. In addition, the EGR gas pipe 61 can be connected to an exhaust pipe 3b positioned downstream of the catalytic converter 4 as shown by a chain double-dashed line in FIG. 1.

The EGR gas cooler 62 cools down EGR gas passing through its inside.

The EGR valve 64 is constructed with an electric type poppet valve. An opening of a valve body 64a is continuously controlled by the control device 55. Thereby, the EGR valve switches recycling and stopping of EGR gas and adjusts an amount of EGR gas flow. An opening of this EGR valve 64 is controlled by the control device 55 so that an EGR rate responding to an operation state of the engine can be obtained. This EGR rate is obtained from the map shown in FIG. 6.

A map shown in FIG. 6 is formed by plotting EGR rates in engine speed (horizontal axis) and net average effective pressure (vertical axis), and stored in a memory (not shown) in the control device 55. A net average effective pressure is equivalent to a greatness of a load of the engine 1, and it can be obtained by calculation of, for example, an engine speed and an amount of introduced air.

A dot shown in FIG. 6 shows the EGR rate corresponding to an engine speed and a net average effective pressure. Also, a curve shown in FIG. 6 joins the dots of the same EGR rate in a so-called contour line shape. An EGR rate is set to gradually change between adjoining curves in FIG. 6. For example, an EGR rate increases or decreases between 18% and 20% responding to an increase or decrease in an operation condition of the engine (engine speed and net average effective pressure) in an area between a curve showing the EGR rate 20% and a curve showing the EGR rate 18%.

As shown by FIG. 6, an EGR rate is 28%, which is the maximum, in a medium load and low revolution state, and an EGR rate is 24% in a medium load and medium revolution state in this engine 1. Also, FIG. 6 shows that the EGR valve 64 opens in this engine 1 so that an EGR rate is 15% in an engine operation state (high load operation state) that a net average effective pressure is the greatest.

Also, this EGR valve 64 opens with control by the control device 55 in the case that a negative pressure at the downstream side of the reed valve 65 sharply lowers from a state that the negative pressure is high. The EGR valve 64 opens as foregoing in the cases that an operation state of the engine 1 is switched from a low load state to a high load state in a short period and that the engine 1 operating in a low load state stops.

The reed valve 65 opens only when EGR gas is drawn into the intake passage, and prevents intake air from flowing from the intake passage to the EGR valve 64. This reed valve 65 constructs the check valve in the present embodiment.

The EGR device 5 constructed with these members is provided such that the respective EGR device 5 is provided on each cylinder column, namely, on each of a left and right banks, and individually connected to one side part and the other side part of the venturi member 33. Only one of the EGR devices 5 connected to one cylinder column is shown in FIG. 2. Also, in this embodiment, the EGR device 5 is constructed such that the EGR valve 64 and the reed valve 65 of one EGR device 5, and the EGR valve 64 and the reed valve 65 of the other EGR device are fixed to the venturi member 33 in an integrating manner, and thereby a distance between both the EGR valves 64 and the intake passage (entrance passage 54) is as short as possible. With this structure, an amount of EGR gas lead into the intake passage changes accurately responding to opening or closing of the EGR valve.

As shown in FIG. 2 and FIG. 5, a venturi tube 71 and a gas chamber 72 having an annular cross-section and enclosing around a periphery of this venturi tube 71 are formed inside the venturi member 33. The venturi tube 71 is constructed such that a cross-sectional area of the passage of the intake passage is partly formed small.

The gas chamber 72 is opened to the outside of the venturi member 33 at two side parts where the reed valves 65 are mounted, and connected to an inside of a downstream part 65a of the reed valve 65 mounted on the venturi member 33 as covering this opened part. Also, an inner periphery part of the gas chamber 72 is connected to an inside of the exhaust passage (entrance passage 54) via a slit 73 opening on an internal wall surface of the venturi tube 71.

As shown in FIG. 5, this slit 73 is formed such that it penetrates an internal wall 74 having an annular cross section, which defines the gas chamber 72 and the intake passage (entrance passage 54), in the thickness direction. Also, the slit 73 is formed at four parts in the circumference direction of the internal wall 74. That is, the intake passage (entrance passage 54) is communicatively connected to the inside of the downstream part 65a of the reed valve 65 via these slits 73 at the four parts and the gas chamber 72. Therefore, according to this embodiment, the slit 73 structures an EGR gas exit (exhaust gas exit) of the EGR device 5.

With the engine 1 constructed as foregoing, a negative pressure occurring inside the intake passage (entrance passage 54) downstream of the throttle valve 34 is transmitted to the EGR device 5 via the venturi member 33. In a state that the EGR valve 64 is open, EGR gas is drawn into the intake passage due to a pressure difference between an inside of the intake passage and an inside of an exhaust passage of the exhaust pipe 3a. EGR gas drawn from the EGR device 5 into the intake passage is cooled down by the EGR gas cooler 62 and its temperature is lowered.

A pressure is kept negative inside the venturi tube 71 of the venturi member 33 because of a high speed flow of intake air even in a state such that the throttle valve 34 opens widely and the negative pressure decreases.

Therefore, in the engine 1 according to this embodiment, EGR gas is led into the intake passage (entrance passage 54) by the EGR device 5 in high load operation such that an opening of the throttle valve 34 is relatively large, and thereby an EGR rate is improved. EGR gas drawn into the entrance passage 54 and fresh air is distributed from the surge tank 32 to the intake passage 53 of each cylinder, and drawn into the combustion chamber S of each cylinder.

A combustion temperature is lowered in this engine 1 because EGR gas is drawn into the combustion chamber S as foregoing. Generally, knocking does not easily occur in an engine if a combustion temperature is lowered. Therefore, because a combustion temperature can be lowered with the improvement of an EGR rate in a high load operation in the engine 1 according to this embodiment, a compression ratio can be set high comparing with general V-type eight-cylinder engines while preventing occurrence of knocking.

As a result of setting a compression ratio high as mentioned above, thermal efficiency is high and fuel efficiency is improved in high load operation in the engine 1 according to this embodiment. The air-fuel ratio of the fuel for the engine 1 is determined as a theoretical air-fuel ratio, and therefore hazardous constituents in the exhaust gas are purified when the exhaust gas passes through the catalytic converter 4.

On the other hand, in the engine 1 according to this embodiment, an opening of the intake control valve 44 is reduced in low or medium load operation, and intake air flows from the surge tank 32 mainly into the auxiliary intake passage 52 (auxiliary intake port 27 and auxiliary intake path 42). In this engine 1, an amount of intake air passing through the auxiliary intake passage 52 increases, and thereby a tumble generates in the cylinder. Therefore, combustion is stabilized in low or medium load operation. As foregoing, fuel efficiency is improved because of the stabilization of combustion. A producing cost of the engine 1 can be held down because the intake control valve 44 according to this embodiment is constructed with an inexpensive butterfly valve whose mechanism is simple.

More EGR gas is led into the intake passage by the EGR device 5 by increasing an opening of the EGR valve 64 in low or medium load operation of the engine 1. An EGR rate is set high, an amount of intake air flowing inside the auxiliary intake passage 52 increases, and thereby a strong tumble that is more effective generates. Moreover, in this case, an amount of intake air increases with a constant opening of the throttle valve 34, and thus pumping loss is reduced. Therefore, fuel efficiency is further improved in low or medium load operation.

A pressure inside the exhaust pipe 3a increases or decreases due to an exhaust pulsation in the engine 1 according to this embodiment. In the case that a pressure inside the exhaust pipe 3a is lower than a pressure inside the venturi tube 71, the reed valve 65 closes, and thereby flow of fresh air into the exhaust pipe 3a inside the EGR device 5 can be prevented. A valve body of this reed valve 65 is formed into a thin sheet shape, and thus it may deform due to a sharp rise of a pressure in an downstream side. However, the EGR valve 64 opens when the pressure in the downstream side of the reed valve 65 sharply rises in the engine 1 according to this embodiment. Therefore, with this engine 1, a pressure of EGR gas is applied to an upstream side of the reed valve 65 and the pressures of the upstream side and the downstream side are balanced, and thereby a deformation of the valve body can be prevented.

Therefore, with the engine 1 according to this embodiment, EGR gas is led into the intake passage (entrance passage 54) over almost the entire operation range of the engine including high load operation, and fuel efficiency is improved. Also, in low or medium load operation, without using an expensive variable valve timing mechanism, fuel efficiency is improved using the inexpensive intake control valve 44.

Therefore, according to this embodiment, the engine 1 can be produced such that fuel efficiency is improved over the entire operation range and also its producing cost is low.

The engine 1 according to this embodiment is constructed such that fuel is supplied in the theoretical air-fuel ratio over almost the entire operation range. Therefore, with this engine 1, fuel consumption is lowered comparing with the engine 1 such that an air-fuel ratio is set to a rich side in high load operation.

In the engine 1 according to this embodiment, the EGR valve 64 opens in the cases that an operation state is switched from a low load state to a high load state in a short period and the engine 1 operating in a low load state stops. Therefore, the EGR valve 64 opens when a large pressure difference occurs between the upstream side and the downstream side of the reed valve 65 and EGR gas is led to the upstream side of the reed valve 65. Thereby, the pressures of the upstream side and the downstream side of the reed valve 65 are balanced. As a result of this, a deformation of the valve body of the reed valve 65 due to the pressure difference can be prevented, and thus the thin, light and inexpensive reed valve 65 that is good at high speed response as a check valve can be used.

This engine 1 according to this embodiment is provided with the two auxiliary intake passages 52 such that they are parallel to each other. Therefore, with this engine 1, intake air flowed out from the auxiliary intake passage 52 (auxiliary intake port 27) can be sent into the combustion chamber through both the sides of the valve stem 23a of the intake valve 23. That is, intake air flowed out from the auxiliary intake port 27 flows into the combustion chamber S keeping a high flow speed without being blocked by the valve stem 23a of the intake valve 23. As a result of this, according to this embodiment, a more effective tumble can be generated inside the cylinder, and fuel efficiency is improved further.

In the embodiment described above, an example that the reed valve 65 is used as a check valve is shown. However, a type of a check valve can be properly changed.

Also, an example that the present teaching is applied to a V-type eight-cylinder engine is shown in the embodiment described above. However, the present teaching can be applied to other types of engines.

The description above discloses (amongst others) a spark ignition type engine which includes an intake device for distributing intake air passed an entrance passage having a throttle valve to an intake passage of each cylinder, and an exhaust gas recirculation device for leading exhaust gas to an intake system via an exhaust gas recirculation valve, in which each of the intake passages is constructed with a main intake passage connected to a combustion chamber via an intake valve and having an intake control valve in its upstream, and a plurality of auxiliary intake passages extending along the main intake passage and having upstream ends opened in an upstream of the intake control valve and downstream ends opened in a vicinity of an intake valve in the main intake passage for generating a tumble, and a venturi tube is provided on a downstream side of the throttle valve in the entrance passage, an exhaust gas exit of the exhaust gas recirculation device is formed on an internal wall surface of this venturi tube, and a check valve is provided between the exhaust gas exit and the exhaust gas recirculation valve (embodiment 1).

The above embodiment of a spark ignition type multi-cylinder engine might further include the control device for opening the exhaust gas recirculation valve in the cases that an engine operation state is switched from a low load state to a high load state in a short period and the engine operating in a low load state stops (embodiment 2).

In the above embodiments of the spark ignition type multi-cylinder engine, each cylinder might have the intake valve, and the auxiliary intake passages might be provided such that two auxiliary intake passages are directed toward both sides of a valve stem of the intake valve and arranged in parallel to each other (embodiment 3).

### Effect of the above Embodiments:

According to the present embodiment 1, exhaust gas (EGR gas) is drawn from the exhaust gas recirculation device into the venturi tube due to a pressure difference between an inside of the venturi tube and an inside of the exhaust passage. A pressure is kept negative inside the venturi tube and also in a high load operation that a throttle opening becomes large.

Therefore, according to the present embodiment 1, EGR gas is led into the intake passage by the exhaust gas recirculation device in high load operation, and thus EGR rate is improved. A combustion temperature of the engine lowers because of a high EGR rate. Generally, knocking does not easily occur when a combustion temperature of the engine lowers. A combustion temperature is lowered in this engine because of the improvement of EGR rate, and thus a compression ratio can be set high while preventing occurrence of knocking. Therefore, according to the present invention, thermal efficiency is high as a result of increasing the compression ratio as mentioned above, and fuel efficiency in high load operation is improved.

Meanwhile, in low or medium load operation, an intake control valve closes, and a tumble is generated in the cylinder using the auxiliary intake passage. Thereby, combustion can be stabilized. The intake control valve can be constructed with a simple and inexpensive switch valve which simply opens or closes the main intake passage in an ON-OFF manner or continuously. Fuel efficiency is necessarily improved because combustion is stabilized.

EGR gas is led into the intake passage by the exhaust gas recirculation device in this low or medium operation, and an EGR rate increases. Thereby, an amount of intake air (fresh air + EGR gas) flowing in the auxiliary intake passage increases and a more effective tumble generates. Combustion becomes more stable and pumping loss is reduced. Therefore, fuel efficiency is improved further. In the case that a pressure inside the exhaust passage becomes lower than a pressure inside the venturi tube due to an exhaust pulsation while the engine is operating, a check valve prevents an inflow of intake air to the exhaust passage. EGR gas is stably mixed into intake air and combustion is stabilized. Therefore, fuel efficiency is improved also.

Therefore, according to the present embodiment 1, fuel efficiency is improved increasing an EGR rate over almost the entire operation range including high load operation. In addition, without using an expensive variable valve timing mechanism, fuel efficiency is improved in low or medium load operation using the intake control valve that can be constructed with an inexpensive switch valve.

As a result of this, according to the present embodiment 1, fuel efficiency is improved over the entire operation range of the engine, and also an engine that can be produced with a low cost can be provided.

According to the embodiment 2, a large pressure difference occurs between the upstream side and the downstream side of the check valve in the cases that an engine operation state is switched from a low load state to a high load state in a short period and the engine operating in a low load state stops. However, with this invention, the exhaust gas recirculation valve opens at this moment and thus EGR gas is led to the upstream side of the check valve. Pressures between the upstream side and the downstream side of the check valve can be balanced.

Therefore, according to the present embodiment 2, a thin, light, and inexpensive reed valve that is good at high-speed response can be used for a check valve, and a producing cost can be reduced more.

According to the embodiment 3, intake air flowed out from the auxiliary intake passage can be sent into a combustion chamber through both the sides of the valve stem of the intake valve. Therefore, intake air flowed out from the auxiliary intake passage is not blocked by the valve stem of the intake valve, and flows into the combustion chamber keeping a high flow speed. Consequently, according to the present embodiment 3, a more effective tumble can be generated in the cylinder, and fuel efficiency is improved further.

The description above further discloses, in order to provide an engine such that fuel efficiency is improved over the entire operation range and a producing cost is lowered, an intake device 2 which is included such that intake air passed through an entrance passage 54 having a throttle valve 34 is distributed to an intake passage 53 of each cylinder. Further, an EGR device 5 is included such that exhaust gas is led to an intake system via an EGR valve 64. Further, the respective intake passage 53 of each cylinder is constructed with a main intake passage 51 provided with an intake control valve 44, and a plurality of auxiliary intake passages 52 along this main intake passage 51 for generating a tumble. Further, a venturi tube 71 is provided on a downstream side of the throttle valve 34 of the entrance passage 54. Further, an exhaust gas exit (slit 73) of the EGR device 5 is formed on an internal wall surface of the venturi tube 71. Further, a reed valve 65 is provided between this exhaust gas exit and the EGR valve 64.

According to the embodiment 1 discussed above, a spark ignition type multi-cylinder engine comprises: an intake device for distributing intake air passed an entrance passage having a throttle valve to an intake passage of each cylinder; and an exhaust gas recirculation device for leading exhaust gas to an intake system via an exhaust gas recirculation valve, wherein each of the intake passages is constructed with a main intake passage connected to a combustion chamber via an intake valve and having an intake control valve in its upstream, and a plurality of auxiliary intake passages for generating a tumble, extending along the main intake passage and having upstream ends opened in an upstream of the intake control valve and downstream ends opened in a vicinity of an intake valve in the main intake passage, and a venturi tube is provided on a downstream side of the throttle valve in the entrance passage, an exhaust gas exit of the exhaust gas recirculation device is formed on an internal wall surface of this venturi tube, and a check valve is provided between the exhaust gas exit and the exhaust gas recirculation valve.

Further, according to the embodiment 2, the spark ignition type multi-cylinder engine further comprises a control device for opening the exhaust gas recirculation valve in the cases that an engine operation state is switched from a low load state to a high load state in a short period and the engine operating in a low load state stops.

Further, according to the embodiment 3, each cylinder has the intake valve, and the auxiliary intake passages are provided such that two auxiliary intake passages are directed toward both sides of a valve stem of the intake valve and arranged in parallel to each other.

## Claims

1. Spark ignition type multi-cylinder engine (1), comprising:
an intake device (2) for distributing intake air, which passed an entrance passage having a throttle valve (34), to an intake passage (53) of each cylinder;
an exhaust gas recirculation device (5) for leading exhaust gas to an intake device (2) via an exhaust gas recirculation valve (64),
wherein each of the intake passages (53) includes:
a main intake passage (51) connected to a combustion chamber (S) via an intake valve (23) and having an intake control valve (44) at an upstream side thereof,
and a plurality of auxiliary intake passages (52) for generating a tumble, extending along the main intake passage (51) and having upstream ends opened in an upstream of the intake control valve (44) and downstream ends opened in a vicinity of an intake valve (23) in the main intake passage (51),
wherein said intake device (2) comprises a venturi tube (71) provided in the entrance passage on a downstream side of the throttle valve (34),
and wherein an exhaust gas exit of the exhaust gas recirculation device is formed on an internal wall surface of this venturi tube (34).

2. Spark ignition type multi-cylinder engine according to claim 1, wherein the exhaust gas recirculation passage comprises a check valve (65) provided between the exhaust gas exit and the exhaust gas recirculation valve (64).

3. Spark ignition type multi-cylinder engine according to claim 1 or 2, further comprising a control device (55) configured to open the exhaust gas recirculation valve (64) in the cases that an engine operation state is switched from a low load state to a high load state in a short period and/or the engine operating in a low load state stops.

4. Spark ignition type multi-cylinder engine according to one of the claims 1 to 3, wherein each cylinder has the intake control valve (44), and the auxiliary intake passages (52) are provided such that two auxiliary intake passages (52) are directed toward both sides of a valve stem (23a) of the intake valve (23) and arranged in parallel to each other.
